# EUROPEAN PATENT APPLICATION

(11) **EP 3 854 219 A1**
(43) Date of publication of application: **28.07.2021**
(21) Application number: 21153069.6
(22) Date of filing: 22.01.2021
(51) Int. Cl.: A23K 20/105, A01K 15/02, A23K 50/40

(54) **EDIBLE AND WATER-SOLUBLE CHEWABLE TOY FOR ANIMALS, IN PARTICULAR FOR THE RELEASE OF ACTIVE INGREDIENTS**

(30) Priority: 24.01.2020 IT 202000001405
(71) Applicant: New Project S.r.l., 20814 Varedo (MB) (IT)
(72) Inventor: LANDINI, Luca, 20814 Varedo (MB) (IT); CHIELLINI, Emo, 20814 Varedo (MB) (IT); SANDIAS, Francesco, 20814 Varedo (MB) (IT); PEREZ AMARO, Lucia, 20814 Varedo (MB) (IT); GUAZZINI, Tommaso, 20814 Varedo (MB) (IT)
(74) Representative: Santi, Filippo

(57) **Abstract**

The present invention relates to an edible chewable item for animals comprising:
- a thermoplastic component consisting of one or more polyvinyl alcohols or a mixture of one or more poly(vinyl alcohols) and a poly(vinyl acetate) homopolymer, said thermoplastic component being in an amount between 10% and 20%, preferably between 13% and 15%;
- starch in an amount between 40% and 60%, preferably between 45% and 55%;
- at least one plasticizer in an amount between 20% and 40%, preferably between 25% and 35%;
said percentages being calculated in relation to the total composition of said chewable item;
said chewable item being characterised in that said one or more poly(vinyl alcohols) have a degree of hydrolysis between 60% and 85%.

## Description

The present invention relates to an edible and water-soluble chewable toy for animals, in particular for the release of active ingredients.

More specifically, the invention relates to an edible chewable for animals capable of being chewed and swallowed by the animal for food and/or therapeutic purposes. In fact, said chewable is capable of easily and rapidly releasing one or more substances and/or active ingredients, in particular anti-motion-sickness active ingredients, such as ginger powder, parsley, basil, oregano, rosemary, peppermint.

Known chewables for animals can be made of various materials. For example, they can be made of animal skin, animal meat and skin, animal bone, or protein-based materials, e.g. using casein and milk derivatives, gluten and its derivatives, gelatine and collagen. A further category comprises starch-based chewables, possibly also comprising degradable copolymers, such as e.g. polyvinyl alcohol and the like. In particular, starch-based chewables may comprise particular food additives, such as e.g. garlic powder, inulin, oligo fructose (starch-like homopolymers), isomalt (a sugar) and the like. In addition, other additives such as abrasives, additives for teeth, flavourings and colourings may be added. Plant fibres or protein fibres may also be used to increase the average chewing time of the item, thus improving its mechanical properties and for an abrasive action against tartar.

In general, the chewable product should consist of an edible thermoplastic material, which can preferably be injection moulded. Starch is particularly advantageous for this purpose. In particular, starch undergoes an (at least partial) gelatinisation process to be digestible and a plasticisation process to be thermoplastic.

However, known chewables for animals comprising substances of various kinds, e.g. food additives, flavourings and/or active ingredients, are characterised by an inefficient release of said substances during chewing.

In view of the above, there is a clear need for a chewable for animals that is edible and improves the release of substances, in particular food additives, active ingredients and/or flavourings during chewing.

In this context, the solution according to the present invention aims to provide a chewable for animals, preferably dogs, having a composition such as to provide an efficient and rapid release of food additives, active ingredients and/or flavourings distributed in the mass of the chewable, and at the same time being edible in case it is ingested.

In particular, the present invention relates to a chewable for animals having a starch and polyvinyl alcohol-based (PVA) composition, such as to make the chewable softer and more water-soluble than known chewables. The increased softness of the chewable means that the chewing time is reduced and the animal swallows fragments of the chewable more quickly. The increased water solubility is due to a lower degree of hydrolysis of the PVA than the PVA in known chewables and makes the active ingredient available for faster release. In this way, the animal will quickly benefit from the active ingredient by ingesting the object more quickly, which also solubilises more quickly. Therefore, the chewable according to the present invention may advantageously be used for applications for which a rapid release of the active ingredient is required, such as in particular in the case of active ingredients with anti-motion-sickness activity, i.e. against car sickness.

As mentioned above, the chewable according to the present invention is starch-based, which in addition to having the advantage of being a low-cost product, is not harmful, and therefore makes the chewable edible. Even if opportunely plasticised, starch itself is very fragile, hard and not very soluble, and therefore would not be suitable for the purpose of rapid release of active ingredients in the composition. The addition of at least one polyvinyl alcohol according to the present invention has advantageously improved the mechanical properties of the chewable, increased its processability and modulated its water-solubility compared to known chewables. A higher concentration of starch affects solubility, slowing it down, while a higher concentration of polyvinyl alcohol promotes it. Therefore, by varying the ratio of polyvinyl alcohol to starch in the formulation, the rate of release of the active ingredient may be modulated.

As shown below, in particular in Example 4, it was observed that a moulded bone having a formulation according to the present invention, placed in a solution adapted to replicate canine saliva (pH 8 buffer at a temperature of 38 °C), was able to partially dissolve its surface and soften already within 5 minutes, it being slightly sticky and causing the solution to become turbid, contrary to a commercial bone which after 20 minutes did not cause the solution to become turbid. On the basis of these results, it can be stated that compared to known chewables, the chewable according to the present invention allows an effective release of active ingredients in a much faster time once in contact with the saliva of the animal.

Thus, the chewable according to the present invention may be used as a carrier for active ingredients for therapeutic purposes and/or as a carrier for other types of substances, such as food additives or flavourings. In this respect, a further advantageous application of the chewable according to the present invention is that of the training chewable, preferably a technical training bone, for example for truffle, hunting or drug-detection dogs, wherein the flavouring or substance is efficiently released into the air due to the softness of the chewable.

The chewable according to the present invention is given by a formulated product based on industrially processable corn starch and comprising ingredients that are easy for the animal to digest. Furthermore, the colour of the chewable according to the present invention is substantially neutral, and therefore if a bone shape is to be made, it is very similar to the natural colour of a bone or may be easily coloured without altering the colour shade.

These and other results are achieved according to the present invention by proposing an edible chewable for animals capable of rapidly and efficiently releasing food additives, active ingredients and/or flavourings therein.

The aim of the present invention is therefore to make a chewable that can overcome the limitations of known solutions and achieve the technical results described above.

Last but not least, the aim of the invention is to create a device that is essentially simple, safe and reliable.

It is therefore a specific object of the present invention a comestible chewable item for animals comprising:
- a thermoplastic component consisting of one or more poly(vinyl alcohols) or a mixture of one or more poly(vinyl alcohols) and a poly(vinyl acetate) homopolymer, said thermoplastic component being in an amount between 10% and 20%, preferably between 13% and 15%;
- starch in an amount between 40% and 55%, preferably between 43% and 50%;
- at least one plasticizer in an amount between 20% and 40%, preferably between 25% and 35%;
   said percentages being calculated in relation to the total composition of said chewable item;
   said chewable item being characterised in that said one or more poly(vinyl alcohols) have an average degree of hydrolysis between 60% and 85%. Thus, the chewable item according to the present invention is a comestible chewable item for animals comprising starch, at least one poly(vinyl alcohol) and at least one plasticizer, wherein said at least one poly(vinyl alcohol) preferably has a degree of hydrolysis less than or equal to 85%. Said one or more poly(vinyl alcohols) may have an average degree of hydrolysis between 60% and 85%, such as e.g. between 60% and 80%. Preferably, said one or more poly(vinyl alcohols) have an average degree of hydrolysis between 70% and 80%.

In a preferred embodiment, said chewable item may comprise two poly(vinyl alcohols), preferably a first poly(vinyl alcohol) with a degree of hydrolysis between 70% and 74% and a second poly(vinyl alcohol) with a degree of hydrolysis between 78.5% and 80.5%, even more preferably a first poly(vinyl alcohol) with a degree of hydrolysis of about 70% and a second poly(vinyl alcohol) with a degree of hydrolysis of about 80%.

According to a preferred embodiment, said chewable item may further comprise one or more anti-motion-sickness active ingredients and/or other therapeutic active ingredients in a percentage of up to 50% of the total composition of said chewable. Preferably, said one or more anti-motion-sickness active ingredients and/or other therapeutic active ingredients are in a percentage from 0.5% to 5% of the total composition of said chewable item. Said one or more anti-motion-sickness active ingredients may be chosen from ginger powder, parsley, basil, oregano, rosemary, peppermint. Moreover, said one or more therapeutic active ingredients may comprise active ingredients aimed at promoting intestinal well-being, preferably chosen from activated vegetable carbon, parsley, basil.

According to the present invention, the chewable item may further comprise:
fatty acids and/or fatty acid amides and/or salts of fatty acid and/or other process additives chosen from calcium stearate, erucamide, docosanamide and zinc stearate, in a percentage of up to 20% of the total composition of said chewable item;
seaweed, preferably *Lithothamnium Calcareum, Zostera spp., Ulva lactuca,* and/or other nutrient additives in a percentage of up to 30% of the total composition of said chewable item;
calcium carbonate and/or sodium hexametaphosphate and/or sodium bicarbonate and/or activated vegetable carbon and/or other oral hygiene additives in a percentage of up to 30% of the total composition of said chewable item;
natural fibres, preferably pea fibres, in a percentage of up to 30% of the total composition of said chewable item; and/or
flavourings.

In an embodiment, the chewable according to the present invention may comprise calcium stearate in a percentage from 1% to 3% of the total composition of said chewable item.

According to a further embodiment, the chewable item according to the present invention may comprise pea fibres, calcium carbonate, sodium hexametaphosphate and seaweed in a total percentage from 4% to 10% of the total composition of said chewable.

The present invention is now described, by way of example and without limiting the scope of the invention, according to a preferred embodiment of it, with reference to the examples and accompanying drawings , wherein:
- **Figure 1** shows the pellets obtained from the extrusion of the formulated product F3a5 according to Example 1;
- **Figure 2** shows a mould into which the formulated product F3a5 has been injection-moulded, according to Example 1. It is a bone with a partial central cavity at the back;
- **Figure 3** shows a further mould into which the formulated product F3a5 has been injected, according to Example 1. It is an elongated shape with lateral protuberances and recesses, as well as central holes, which assist in cleaning the teeth when the item is being chewed;
- **Figure 4** shows the infrared spectrum of a bone moulded with the formulated product F3a5;
- **Figure 5** shows an FTIR spectrum of starch, retrieved from databases;
- **Figure 6** shows the thermogravimetric analysis of the bone moulded with formulated product F3a5; the solid black line shows the change in weight as a function of temperature (reference y-axis on the left), while the dashed line shows the derivative of the change in weight (reference y-axis on the right); and
- **Figure 7** shows the calorimetric analysis on bone moulded with formulated product F3a5. Dashed line: heat flow as a function of temperature (reference x-axis immediately below the curves) Solid line: heat flow as a function of time shown with temperature scale (reference x-axis below the other axis).

### EXAMPLE 1 Blending, extruding and moulding a chewable item for animals according to the present invention.

### Instrumentation used

The formulated product was mixed using a Valtorta turbomixer with a maximum capacity of 3 litres, stirring from 250 rpm to a maximum of 650 rpm.

Laboratory-scale plasticisation of the formulated product took place at Brabender Plastograph W 50 EHT, with a 55 cm³ chamber at 130°C and 65 rpm.

The extrusions were carried out with:
25 mm twin screw extruder with L/D ratio = 36 and a temperature profile from feed to output of 90-90-100-100 °C, and with active degassing and cooling of the extrudate with air.

### Mixing, blending, granulation and injection moulding

Table 1 below shows the tested formulation, called F3a5:

**Table 1**

| **Materials** | **% tot** |
|---|---|
| Starch | 45.05 |
| PVA with degree of hydrolysis 78.5-80.5% | 6.72 |
| PVA with degree of hydrolysis 70-74% | 6.72 |
| Glycerol | 14.62 |
| Water | 14.62 |
| Calcium stearate | 2.50 |
| Additives | 9.75 |

Additives means the presence of a mixture of: pea fibre (50%), calcium carbonate (20%), sodium hexametaphosphate (20%) and seaweed (10%).

The above formulation was carried out on a small scale, mixing up to a maximum of 3 kg of material.

Turbo-mixing tests have shown that hot turbo-mixing is not necessary for the plasticisation process. The turbo-mixing step only serves to homogenously mix the formulated product, which is then fully processed in the extruder.

In general, the operational steps to obtain the mixing of the formulated product provided the following steps:
1. mixing the polymers at 250 rpm until the powders are completely homogeneous;
2. adding the liquid plasticisers (glycerol and water) and stirring at 250 rpm until homogeneous;
3. adding the rest of the powder at 250 rpm.

In step 1, it was only necessary to homogenise the polymer powders.

During step 2, a dough very similar to a food dough both in visual appearance and consistency, was obtained.

During step 3, the added powders manage to dry the dough and turn it into a kind of wet powder.

In order to verify that the formulation was able to plasticise in a short time and at relatively low temperatures, it was plasticised in a Brabender (about 55 grams of material at a time), achieving plastic behaviour in less than 2 minutes.

The resulting formulation had the following features:
- easy to process in turbomixers;
- obtainment of a dry mixture that can be fed into the extruder;
- plasticisation of the material in a short time during processing (within 5 min in a Brabender mixer);
- possibility of being reprocessed without degradation (simulation of double transformation: from pellet to mould);
- material with features of increased hardness but at the same time flexible (not having the chicken bone effect); and
- material compatible with the physiology of a dog.

Subsequently, the formulated product was extruded using a twin screw extruder, resulting in a granule that was then injection moulded.

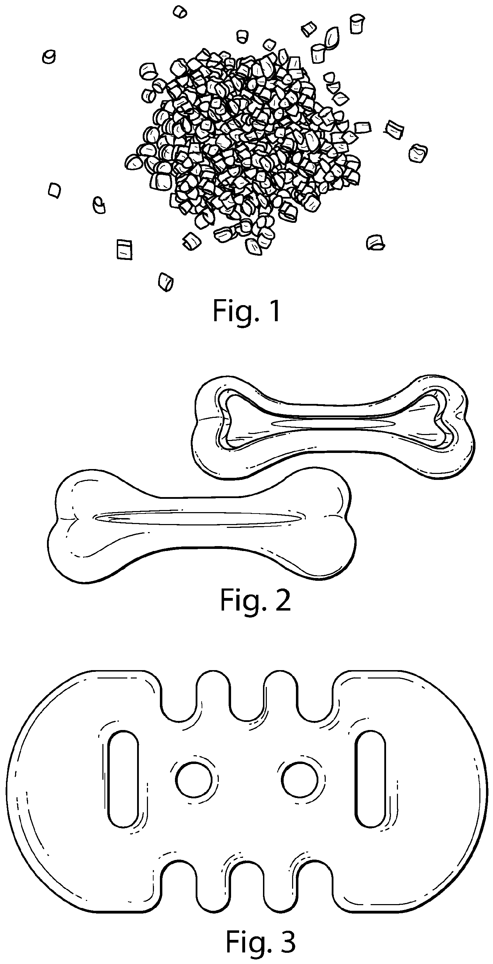

The extruded pellets obtained are shown in Figure 1.

The granules obtained by extrusion were injection-moulded into a dog-bone shape, as shown in Figure 2. By using a different mould, it was possible to obtain different shapes, such as the one shown in Figure 3.

Injection moulding was carried out with a heat profile of 90-120°C, an injection speed of 30 cm³/sec and an injection pressure of 500/550 bar to form a dog-bone-shaped item.

In terms of hardness and elasticity, the formulation F3a5 was very elastic but simultaneously also stiff and it was difficult to achieve a clean break, which with its sharp edges would have been dangerous for the dog, as chicken bones are. The Melt Flow Index of the material obtained, measured at 100 °C with a weight of 21.6 kg, is 8.6-9.8 g/10 min.

The moulded bone obtained with this formulation, placed in a solution adapted to mimic canine saliva (pH 8 buffer at 38 °C), is able to partially dissolve its surface within 5 minutes under static conditions, creating a sticky, easily removable coating. The action of saliva in an animal's mouth, combined with the chewing action, makes the assimilation of the product very rapid.

### EXAMPLE 2 Blending and extruding a formulated product adapted to make a chewable item for animals according to the present invention

### Instrumentation used

The turbo-mixing of the ingredients took place with the same instrument as in Example 1, while the formulated product was extruded with an 18 mm twin screw extruder, L/D ratio of 40, temperature profile from feed to output of 70-70-90-90-110-110-130-130 °C, active degassing and air cooling.

### Mixing, blending and granulation

Table 2 below shows the tested formulation called O2:

**Table 2**

| **Materials** | **% tot** |
|---|---|
| Starch | 48.51 |
| PVA with degree of hydrolysis 70-74% | 9.48 |
| Poly(vinyl acetate) | 5.00 |
| Glycerol | 15.74 |
| Water | 15.74 |
| Calcium stearate | 1.09 |
| Additives | 4.44 |

Additives means the presence of a mixture of: pea fibre (50%), calcium carbonate (20%), sodium hexametaphosphate (20%) and seaweed (10%).

The above formulation was carried out on a small scale, mixing up to a maximum of 3 kg of material.

The formulation was mixed as described in Example 1.

Following extrusion, an extrudate is obtained with features so it can be moulded according to the object of the invention.

### EXAMPLE 3 Blending and extruding a formulated product adapted to make a chewable item for animals according to the present invention.

### Instrumentation used

The turbo-mixing and extrusion of the ingredients was carried out with the same equipment as in Example 2 and using the same operating conditions.

### Mixing, blending and granulation

Table 3 below shows the tested formulation, called F3a7:

**Table 3**

| **Materials** | **% tot** |
|---|---|
| Starch | 45.05 |
| PVA with degree of hydrolysis 78.5-80.5% | 6.72 |
| PVA with degree of hydrolysis 70-74% | 6.72 |
| Glycerol | 14.62 |
| Sorbitol | 14.62 |
| Calcium stearate | 2.50 |
| Additives | 9.75 |

Additives means the presence of a mixture of: pea fibre (50%), calcium carbonate (20%), sodium hexametaphosphate (20%) and seaweed (10%).

The above formulation was carried out on a small scale, mixing up to a maximum of 3 kg of material.

Mixing in the turbomixer did not result in the formation of a dough as described in Example 1, and the final formulation consists of a fine dry powder.

Following extrusion, an extrudate is obtained with features so it can be moulded according to the object of the invention.

### EXAMPLE 4 Characterisation of the mechanical and physical-chemical properties of a chewable item for animals according to the present invention.

The chewable item according to the present invention obtained in Example 1 (formulation called F3a5) was subjected to certain analyses for material characterisation.

### Instrumentation used and methodologies

### Infrared Spectroscopy in Attenuated Total Reflectance (ATR) mode

The instrumentation used is a Perkin Elmer Frontier spectrophotometer in the range 4000-400 cm⁻¹, using the ATR accessory with germanium crystal and a number of scans of 16.

### Thermogravimetry

The instrumentation used is a ThermoGravimetric Analyzer (TGA) TGA Q500 by T.A. Instruments Inc., equipped with platinum crucibles. Analyses were carried out under inert nitrogen flow (40 mL/min), heating at 10 °C/min in the temperature range of 20 - 800 °C. The sample mass analysed was between 5 and 15 mg. The data were processed with Universal V4.5A TA Instruments software.

### Differential scanning calorimetry analysis (DSC)

The instrumentation used is a Mettler Toledo DSC821e calorimeter. The analysis was carried out in an inert atmosphere (N2) using the following thermal steps:
- 40 - 240 °C at 10 °C/min and hold 240 °C for 2 minutes; 240 - -40 °C at 10 °C/min and hold -40 for 2 minutes;
- 40 - 240 °C at 10 °C/min.

### Salivary solubility test

The tests were carried out with a pH 8 phosphate buffer solution opportunely prepared in the laboratory (obtained with 16.282 g/L of K₂HPO₄ and 0.888 g/L of KH₂PO₄), at a temperature of approximately 38°C. The test was carried out on bones moulded with formula F3a5 and on a commercial bone, considered as a reference.

The bones were fully immersed in 250 ml of buffer solution at a temperature of approximately 38 °C for 5-minute intervals, after which they were blotted dry with blotting paper, weighed and observed under an optical microscope. The cycle was repeated four times, for a total immersion time of 20 minutes.

### Optical microscopy

The samples were observed with a ZEISS STEMI508 optical microscope.

### Gas chromatographic analysis

The moulded material was subjected to gas chromatographic analysis using the headspace extraction method for methanol determination.

### Characterisations

The formulated product F3a5 was extruded and granulated at IQAP (Spain) and finally moulded by injection moulding in the shape of bones and pellets, as shown in Example 1 and Figures 1-3.

The material in its moulded form was subjected to a number of analyses, such as:
- Infrared analysis in attenuated total reflection mode (FTIR-ATR)
- Thermogravimetric analysis (TGA)
- Differential scanning calorimetric analysis (DSC)
- Salivary solubility test
- Optical microscopy on dry and wet samples
- Gas chromatographic analysis using headspace extraction method (HS-GC) for methanol determination

### FTIR-ATR analysis

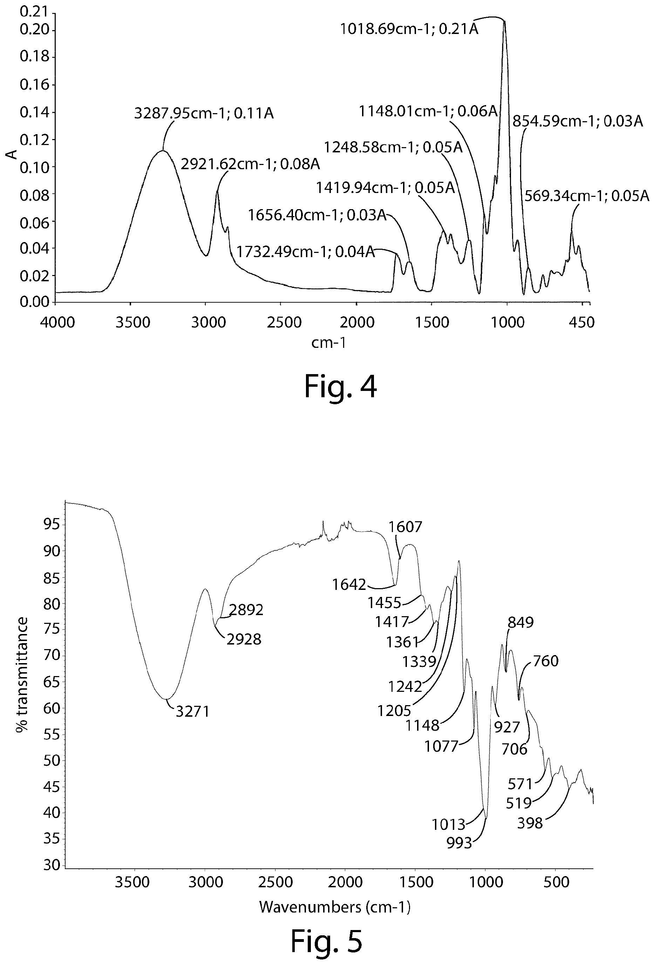

The infrared spectrum obtained on the bone-shaped moulded item is shown in Figure 4. The spectrum of an unprocessed starch from an online database is also shown in Figure 5 for comparison.

It can be seen that the starch bands can all be found on the item. The main difference is due to the presence of an additional band at 1732 cm⁻¹, corresponding to the C=O stretching of a carbonyl bond. The band can be attributed to the presence of poly(vinyl alcohol) (PVA) in the formulated product at a low degree of hydrolysis, and therefore containing many acetate residues capable of absorbing at that wave number.

### TGA analysis

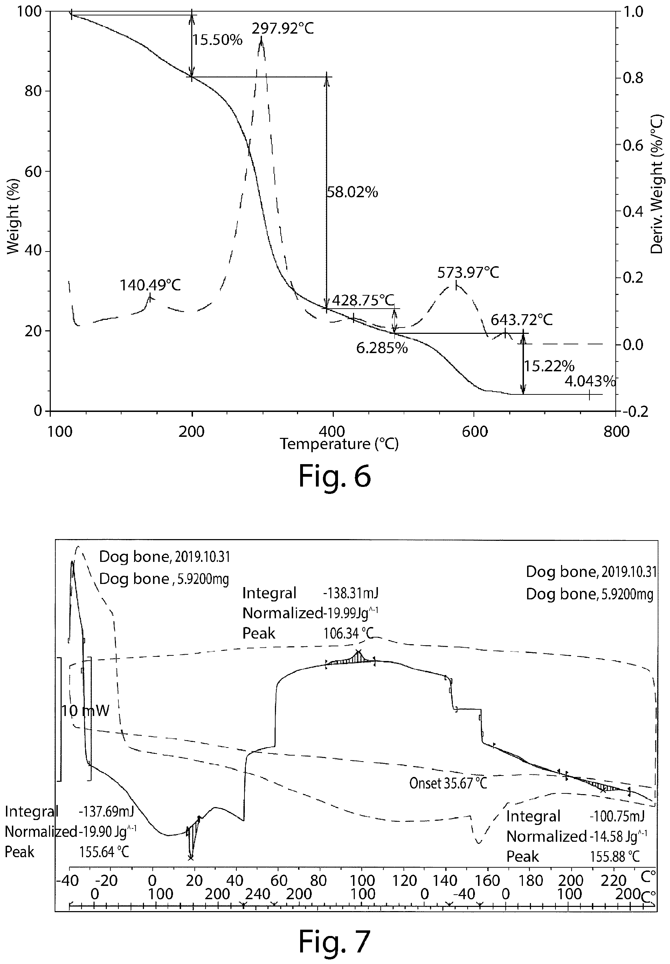

The thermogravimetric analysis is shown in Figure 6, while the data are summarised in Table 4.

**Table 4 - Data from the TGA analysis on the moulded bone**

| **Temperature (°C)** | **Mass loss (%)** | **Tmax (°C)** |
|---|---|---|
| Up to 200 | 15.5 | 140 |
| 200 - 400 | 58.0 | 298 |
| 400 - 500 | 6.3 | 429 |
| 500 - 700 | 15.2 | 574 and 644 |
| Final residue at 800 °C: 4.0 % | | |

The degradation profile of moulded bone consists of several steps. With regard to starches, it is reported *(*Polymers 2015, 7, 1106-1124*;* Journal of material science: materials in medicine 2003, 14, 127-135*;* Journal of renewable materials 2017, 5, 189-198*)* that they exhibit mass losses, corresponding to the adsorbed water, at below 300 °C. Moreover, the main starch chains degrade in the range 300-350 °C and often show further degradation in the range 500-680 °C. With regard to the PVA, it is reported (Journal of nanomedicine and technology, 2015, S7:002. doi:10.4172/2157-7439.57-002) to have two characteristic degradations: one at about 350 °C and one at about 430 °C, while the same article reports a lowering of the first degradation to about 300 °C when it is mixed with starch.

The thermogram of the item under analysis records all the typical degradations of starch and PVA in Figure 6.

Specifically, there is an almost constant loss in mass up to 200 °C, corresponding to about 15% of the mass and attributable to the presence of adsorbed water.

The main degradation (Tmax = 298 °C), corresponding to a 58% loss in mass, is observed in the range 200-400 °C. The degradation is attributable to the degradation of the main starch chains and also to the first degradation phase of the PVA.

A loss in mass of about 6% (Tmax = 429 °C), which can be attributed to the second degradation step of the PVA, is observed in the range 400-500 °C.

The final range, 500-700 °C, shows two degradations (Tmax = 574 and 644), corresponding to 15% of the mass, attributable to impurities and carbon residues from starch, as well as additives in the formulated product, such as fibres and calcium stearate.

In addition, a final residue of 4% due to the inorganic charges contained, is observed.

### DSC analysis

The calorimetric analysis carried out is shown in Figure 7, while the related data are summarised in Table 5. The first heating, which has the function of eliminating the thermal history of the material, registers a melting peak at approximately 155°C, which is indicative of the fact that the material exhibits partial crystallinity. On cooling, the material crystallises at a temperature of about 106 °C, while the second heating confirms the melting again at about 155 °C.

Interestingly, the material is processed well at temperatures below its melting temperature.

**Table 5 - Data from the DSC analysis on the moulded bone**

| **Thermal step** | **Transition** | **Temperature** |
|---|---|---|
| 1^{st} warm-up | Melting | 155.6 °C |
| 1^{st} cooling | Crystallisation | 106.3 °C |
| 2^{nd} warm-up | Melting | 155.9 °C |

### Solubility test and optical microscopy

The samples, the moulded bone according to the present invention (hereinafter referred to as sample 1) and the commercially available chewable toy (hereinafter referred to as sample 2) were analysed under an optical microscope, immersed in a pH 8 saliva solution and at 38 °C for 5 minutes under static conditions and were weighed. The process was repeated several times until the total immersion time was 20 minutes.

It can be observed from the data collected that before immersing the samples in the solution, both have an apparently smooth but rather rough surface when observed under the microscope.

Both samples are slightly bleached after 5 minutes of immersion. Sample 1 has a sticky surface, a clear sign that part of its outer area has started to melt, while sample 2 is not sticky. The sticky consistency of sample 1 makes blotting with paper towels difficult, making it impossible to dry it completely and distorting the weighing. It can be observed under the optical microscope that some areas of sample 1 have holes created by partial solubilisation, while sample 2 appears unaltered.

It is observed already after 5 minutes of immersion that the saliva solution of sample 1 is slightly turbid, indicating a partial solubilisation of the item 1, while the sample 2 solution remains clear throughout the experiment.

In summary, the general situation does not change for every additional 5 minutes of immersion in saliva solution and up to 20 minutes in total: sample 1 is sticky due to partial solubilisation, while sample 2 is only bleached.

In terms of weight, sample 2 shows a slight increase in mass over time, i.e. it is capable of absorbing small amounts of water during the 20 minutes of the duration of the test. Sample 1 shows an increase in weight, but the result is distorted by the fact that the sample cannot be accurately blotted due to its adhesive consistency.

Analysing the cross-section of the two samples at the end of the test, it can be seen that the water penetrated the two samples only on a surface layer, which is slightly thicker for sample 1.

The biggest difference is in the consistency of the layer in which the water has penetrated: very soft and sticky in the case of sample 1, slightly soft and not sticky in the case of sample 2.

Finally, it should be noted that the test was carried out under static conditions, i.e. without stirring the solution. Mechanical action, and even more so the action of an animal chewing, would both remove the surface layers and crush the sample, making its solubility and assimilation faster.

### HS-GC chromatographic analysis

The moulded material was subjected to gas chromatographic analysis using the headspace extraction method. The technique consists in placing the material to be analysed in test tubes subjected to certain thermal cycles, which cause the volatile substances contained to be released.

The atmosphere created in the test tube as a result of thermal cycles is injected into the gas chromatograph, which is able to analytically quantify the volatile substances released.

The test was conducted due to the synthesis methods by which PVA is industrially produced because it may contain up to 3% (depending on the manufacturer) of methanol, a substance that is considered toxic.

The safety data sheet for methanol states:
▪ Oral ingestion of methanol in rats: LD50 = 5628 mg/kg Online databases (http://www.inchem.org/documents/pims/chemical/pim335.htm) indicate:
▪ Oral ingestion in dogs: LDLo = 7500 mg/kg
▪ The Food Additives and Contaminants Committee recommends that methanol should only be used in food as a solvent in extraction processes and limits the daily intake to a maximum of 8 ppm in food.

The result of the analysis carried out on the moulded bone, performed specifically for methanol and using the UNI EN 13628-2:2004 method, is shown in Table 6.

**Table 6 - Results of methanol analysis on moulded bone**

| **Sample** | **Result** |
|---|---|
| Chewable bone moulded according to F3a5 | 2.6 mg/kg |

The resulting value is minimal and the mouldable bone is toxicologically safe.

### Conclusions

In conclusion, the bone-shaped moulded item obtained with the formula F3a5 was characterised and it was shown that:
- Infrared analysis showed the characteristic bands for starch and PVA.
- The TGA analysis showed that the sample has about 15% water and that it degrades in multiple steps, which can be associated with the degradation profiles of starch and PVA. It also has a final mass residue of 4%.
- DSC analysis showed a crystalline phase with a melting temperature of 155 °C and a crystallisation temperature of 106 °C.
- The solubility test, combined with the optical microscopy, revealed that the sample softens within 5 minutes after immersion in saliva solution and partially solubilises, resulting in stickiness. A commercially available reference sample does not show said solubility under the same conditions.
- The HS-GC analysis showed the very low presence of methanol - 2.7 ppm - in the final product.

The present invention is described by way of example only, without limiting the scope of application, according to its preferred embodiments, but it shall be understood that the invention may be modified and/or adapted by experts in the field without thereby departing from the scope of the inventive concept, as defined in the appended claims.

## Claims

1. Edible chewable item for animals comprising:
- a thermoplastic component consisting of one or more poly(vinyl alcohols) or a mixture of one or more poly(vinyl alcohols) and a poly(vinyl acetate) homopolymer, said thermoplastic component being in an amount between 10% and 20%, preferably between 13% and 15%;
- starch in an amount between 40% and 55%, preferably between 43% and 50%;
- at least one plasticizer in an amount between 20% and 40%, preferably between 25% and 35%;
said percentages being calculated in relation to the total composition of said chewable item;
said chewable item being **characterised in that** said one or more poly(vinyl alcohols) have an average degree of hydrolysis between 60% and 85%.

2. Chewable item according to claim 1, **characterised in that** said one or more poly(vinyl alcohols) have an average degree of hydrolysis between 70% and 80%.

3. Chewable item according to any one of the preceding claims, **characterised in that** it comprises two poly(vinyl alcohols), preferably a first poly(vinyl alcohol) with a degree of hydrolysis between 70% and 74% and a second poly(vinyl alcohol) with a degree of hydrolysis between 78.5% and 80.5%, even more preferably a first poly(vinyl alcohol) with a degree of hydrolysis of about 70% and a second poly(vinyl alcohol) with a degree of hydrolysis of about 80%.

4. Chewable item according to any one of the preceding claims, **characterised in that** it further comprises one or more anti-motion-sickness active ingredients and/or other therapeutic active ingredients in a percentage of up to 50% of the total composition of said chewable.

5. Chewable item according to claim 4, **characterised in that** said one or more anti-motion-sickness active ingredients and/or other therapeutic active ingredients are in a percentage from 0.5% to 5% of the total composition of said chewable item.

6. Chewable item according to any one of claims 4-5, **characterised in that** said one or more anti-motion-sickness active ingredients are chosen from ginger powder, parsley, basil, oregano, rosemary, peppermint.

7. Chewable item according to any one of claims 4-5, **characterised in that** said one or more therapeutic active ingredients comprise active ingredients aimed at promoting intestinal well-being, preferably chosen from activated vegetable carbon, parsley, basil.

8. Chewable item according to any one of the preceding claims, **characterised in that** it further comprises:
fatty acids and/or fatty acid amides and/or salts of fatty acid and/or other process additives chosen from calcium stearate, erucamide, docosanamide and zinc stearate, in a percentage of up to 20% of the total composition of said chewable item;
seaweed, preferably *Lithothamnium Calcareum, Zostera spp., Ulva lactuca,* and/or other nutrient additives in a percentage of up to 30% of the total composition of said chewable item;
calcium carbonate and/or sodium hexametaphosphate and/or sodium bicarbonate and/or activated vegetable carbon and/or other oral hygiene additives in a percentage of up to 30% of the total composition of said chewable item;
natural fibres, preferably pea fibres, in a percentage of up to 30% of the total composition of said chewable item; and/or
flavourings.

9. Chewable item according to claim 8, **characterised in that** it comprises calcium stearate in a percentage from 1% to 3% of the total composition of said chewable item.

10. Chewable item according to any one of claims 8-9, **characterised in that** it comprises pea fibres, calcium carbonate, sodium hexametaphosphate and seaweed in a total percentage from 4% to 10% of the total composition of said chewable item.
